Europäisches Patentamt

(19) European Patent Office

Office européen des brevets

(11) Publication number: **0 238 107
B1**

## EUROPEAN PATENT SPECIFICATION

(45) Date of publication of the patent specification:
18.04.90

(51) Int. Cl.⁴: **B01J 8/12, C10G 49/14**

(21) Application number: 87200099.7

(22) Date of filing: 23.01.87

(54) Process and apparatus for contacting gas, liquid and solid particles.

(30) Priority: 20.02.86 NL 8600428

(43) Date of publication of application:
23.09.87 Bulletin 87/39

(45) Publication of the grant of the patent:
18.04.90 Bulletin 90/16

(84) Designated Contracting States:
BE DE ES FR GB IT SE

(56) References cited:
FR-A- 1 173 100
FR-A- 2 009 455
GB-A- 831 247
GB-A- 1 127 333
GB-A- 2 078 537

(73) Proprietor: SHELL INTERNATIONALE RESEARCH
MAATSCHAPPIJ B.V., Carel van Bylandtlaan 30,
NL-2596 HR Den Haag(NL)

(72) Inventor: Bukkems, Franciscus Henricus Jozephus,
Badhuisweg 3, NL-1031 CM Amsterdam(NL)
Inventor: Blauwhoff, Petrus Matthias Marie,
Badhuisweg 3, NL-1031 CM Amsterdam(NL)
Inventor: Van 't Hoog, Arie Cornelis, Badhuisweg 3,
NL-1031 CM Amsterdam(NL)

(74) Representative: Aalbers, Onno et al, P.O. Box 302,
NL-2501 CH The Hague(NL)

## Description

The invention relates to a process for contacting gas, liquid and solid particles in a reactor, comprising the introduction of gas and liquid into the lower part of the reactor and the introduction of solid particles into the upper part of the reactor, passing gas and liquid upwardly and passing solid particles downwardly, and removing gas and liquid from the upper part of the reactor and removing solid particles from the lower part of the reactor.

In such a process, e. g. in a process as described in GB patent specification 831 247, three phases pass through the reactor: gas, liquid and solid particles, the liquid forming the continuous phase. In general, the spread in the residence time of volume elements of each of the moving phases will be large, so that the spread of the times in which volume elements of the three phases can come into contact with each other also varies greatly. If the process is used to perform a chemical conversion in the gas or the liquid, or a reaction between gas and liquid, catalyzed by catalytically active material on the solid particles, this will result in the conversion or the reaction per volume particle being either incomplete or even being carried too far. Moreover, if during the conversion or the reaction products are released which are deposited on the solid particles, some of these particles will hardly be loaded and will therefore still be active, while others will be overloaded and will have to be regenerated.

In addition, the liquid will contain gas bubbles which can greatly increase in size as they rise. Such large gas bubbles will have an adverse effect on the contact between the moving phases and the spread in the residence time of the phases.

It is an object of the invention to provide a process in which each of the moving phases passes in plug flow through the reactor. Plug flow of a phase is understood to mean a flow of that phase through a space such that the residence times of volume elements of that phase in the space are substantially equal.

A further object of the invention is to provide a process in which the increase in size of the gas bubbles rising through the liquid is prevented.

To this end, according to the invention the process for contacting gas, liquid and solid particles in a reactor comprises

a) introducing gas and liquid into the lower part of the reactor and introducing solid particles into the upper part of the reactor;
b) passing gas and liquid upwardly through a number of contact zones arranged one above the other and having a thickness of between 0.5 cm and 20 cm and separated from each other by screens provided with a large number of apertures with an area per aperture of between 0.05 cm² and 5 cm², the ratio between the sum of the areas of the apertures and the total area of a screen lying between 0.4 and 0.8, and allowing solid particles to pass downwardly through the contact zones; and
c) removing gas and liquid from the upper part of the reactor and removing solid particles from the lower part of the reactor.

The invention further relates to an apparatus for contacting gas, liquid and solid particles, which apparatus according to the invention comprises a reactor provided with inlet means for gas and liquid arranged in the lower part of the reactor, outlet means for gas and liquid arranged in the upper part of the reactor, an inlet for solid particles arranged in the upper part of the reactor, an outlet for solid particles arranged in the lower part of the reactor, and a number of contact zones arranged one above the other in the reactor, with a thickness of between 0.5 cm and 20 cm, separated by screens provided with a large number of apertures with an area per aperture of between 0.05 cm² and 5 cm², the ratio between the sum of the areas of the apertures and the total area of a screen lying between 0.4 and 0.8.

The term "free area" will be used in the description to denote the ratio between the sum of the areas of the apertures and the total area of the screen.

Choosing the thickness of the contact zone, the area of the apertures and the free area between the above-mentioned values has the effect of reducing the speed differences between volume elements of each of the moving phases and thus approximating to plug flow, and also counteracting the growth of gas bubbles, while in addition the lateral exchange of material and heat is not hindered.

The minimum thickness of the contact zone is determined mainly by the number of screens that can be arranged in a reactor. If the thickness is greater than 20 cm, however, the distance between two screens is so great that the effect of the screens on the moving phases is too small for plug flow to be achieved, especially if the free area is about 0.8.

The apertures in the screens can, for example, be circular, rectangular, square or diamond-shaped. In order not to hinder the movement of solid particles through the apertures, the smallest dimension of an aperture will be more than about twice the diameter (or equivalent diameter) of a particle. The areas of the apertures may be different, provided that relatively large parts of a screen are not provided with apertures of one size while other parts of the screen are provided with apertures of another size.

No limits can be given for the number of apertures per screen, although the number can be determined simply from the total area of the screen, the free area and the area per aperture.

In general, the solid particles will be relatively large, with a diameter (or equivalent diameter) of between 0.02 cm and 0.5 cm.

If the free area of a screen is less than 0.4, then even if fluid passes through the reactor at a low speed, the speed of the fluid in the apertures of the screen will be so high that the particles will be shot upwards, even in the case of particles with a diameter of about 0.02 cm. If, however, the free area of the screen is too large, i.e. above 0.8, the effect of a screen on the moving phases will be insufficient to achieve plug flow.

In a suitable embodiment of the invention, the thickness of a contact zone is between 0.5 cm and 20 cm, the area per aperture is between 1.5 cm² and 5 cm² and the free area, is between 0.5 and 0. 8. Choosing larger apertures and a larger free area prevents solid particles from being held up at a screen.

Although installation of the screens in the reactor would be simplified with a thicker contact zone, this would necessitate a smaller free area in order to obtain plug flow. In a further suitable embodiment of the invention, therefore, the thickness of a contact zone is between 5 cm and 20 cm, the area per aperture is between 1.5 cm² and 5 cm² and the free area is between 0.5 and 0.65.

In general, the thickness of a screen is small relative to the thickness of a contact zone, for example 0.1 to 0.2 times the thickness of the contact zone.

The invention will now be discussed by way of example in more detail with reference to the figures, in which

Fig. 1 shows a schematic cross section of the apparatus; and

Fig. 2 shows two examples of plan views of screens.

The apparatus for contacting gas, liquid and solid particles comprises a reactor 1 provided with inlet means for gas and liquid in the form of a gas inlet 2 and a liquid inlet 3 arranged in the lower part of the reactor 1, a particle inlet 4 arranged in the upper part of reactor 1, a particle outlet 5 arranged in the lower part of the reactor 1, and outlet means for gas and liquid in the form of gas outlet 7 and liquid outlet 8 arranged in the upper part of the reactor 1. The gas inlet 2 is designed such that during normal operation gas entering the reactor is uniformly distributed over the cross section of the reactor 1.

The reactor 1 is further provided with a number of contact zones 10 arranged one above the other and separated from each other by screens 11, which are provided with a large number of apertures 12. For the sake of clarity, not all contact zones, screens and apertures are denoted by a reference number.

The reactor is also provided with a bottom screen 15, there being a fluid collecting chamber 16 between the bottom of the reactor 1 and the bottom screen 15.

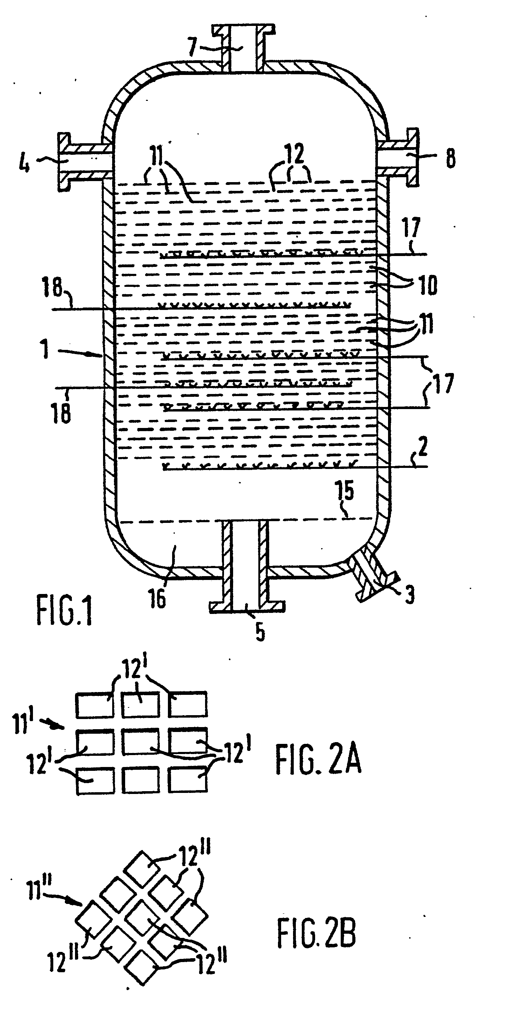

Figure 2A shows a plan elevation of a screen 11' with rectangular apertures 12', and Figure 2B shows a plan elevation of a screen 11″ with diamond-shaped apertures 12″.

In order to contact gas, liquid and solid particles in the reactor 1, gas is introduced through the gas inlet 2 into the reactor 1, and liquid through the liquid inlet 3 via the fluid collecting chamber 16, and in addition solid particles are introduced, at the upper part, through the particle inlet 4. Liquid and gas move through the contact zones 10 arranged one above the other and separated from each other by the screens 11 provided with a large number of apertures 12. Solid particles move from the top to the bottom through the contact zones 10, and, via the bottom screen 15, leave the reactor 1 through the particle outlet 5. Gas and liquid are discharged from the upper part of the reactor through the gas outlet 7 and the liquid outlet 8.

Not shown are stop valves which can be fitted by the inlets and outlets for regulating the supply or discharge of gas, liquid and solid particles.

In general, the height of the reactor will lie between 2 m and 25 m, and the inner diameter thereof will be between 1 m and 3 m.

The total volume of gas introduced into the reactor per unit of time is such that the volume of gas per unit of time that, per unit of area of the cross section of the reactor, moves through the reactor under the temperature and pressure prevailing in the reactor lies between $0.1 \times 10^{-2}$ m³/m²/s and $20 \times 10^{-2}$ m³/m²/s, and preferably between $0.5 \times 10^{-2}$ m³/m²/s and $10 \times 10^{-2}$ m³/m²/s.

The total volume of liquid introduced into the reactor per unit of time is such that the volume of liquid per unit of time that, per unit of area of the cross section of the reactor, moves through the reactor lies between $0.05 \times 10^{-2}$ m³/m²/s and $5 \times 10^{-2}$ m³/m²/s.

The invention is suitable for treating a hydrocarbon-containing liquid with hydrogen, for example cracking, desulphurizing or demetallizing the hydrocarbon-containing liquid. The invention is also suitable for preparing liquid hydrocarbons from synthesis gas containing carbon monoxide and hydrogen. In these processes, the particles contain a catalytically active material known per se to catalyze these reactions.

The above-mentioned reactions will in general take place at a temperature of between 200 °C and 500 °C and a pressure of between 2 MPa and 30 MPa.

Since there is no obstacle to lateral heat exchange in a contact zone, the heat released or needing to be added in these reactions can be removed or added by a medium that flows through vertical tubes (not shown) arranged in the reactor. It is also possible, for cooling purposes, to introduce cold liquid or gas directly into one or more contact zones.

In order for the reactions to take place as uniformly as possible over the height of the reactor 1, it is possible during normal operation for additional gas to be introduced through gas inlets 17 (see Figure 1) and/or additional liquid through liquid inlets 18 into the reactor 1. The gas inlets 17 and the liquid inlets 18 can be arranged in the reactor 1 at different heights. The number will be between 2 and 10. The inlets 17 and 18 are designed such that gas and liquid which is introduced into the reactor is distributed evenly over the cross section of the reactor.

In the above-described process, liquid and solid particles are continuously introduced into the reactor and removed from the reactor. It is also possible for liquid and/or particles to be introduced into the reactor and removed from the reactor at intervals.

**Claims**

1. A process for contacting gas, liquid and solid particles in a reactor comprising
   a) introducing gas and liquid into the lower part of the reactor and introducing solid particles into the upper part of the reactor;

b) passing gas and liquid upwardly through a number of contact zones arranged one above the other and having a thickness of between 0.5 cm and 20 cm and separated from each other by screens provided with a large number of apertures with an area per aperture of between 0.05 cm² and 5 cm², the ratio between the sum of the areas of the apertures and the total area of a screen lying between 0.4 and 0.8, and allowing solid particles to pass downwardly through the contact zones; and

c) removing gas and liquid from the upper part of the reactor and removing solid particles from the lower part of the reactor.

2. Process as claimed in claim 1, characterized in that additional gas and/or additional liquid is introduced into the reactor at different heights.

3. Process as claimed in claim 1 or 2, characterized in that the total volume of gas introduced into the reactor per unit of time is such that the volume of gas per unit of time that, per unit of area of the cross section of the reactor, moves through the reactor lies between $0.1 \times 10^{-2}$ m³/m²/s and $20 \times 10^{-2}$ m³/m²/s.

4. Process as claimed in claim 3, characterized in that the total volume of gas introduced into the reactor per unit of time is such that the volume of gas per unit of time that, per unit of area of the cross section of the reactor, moves through the reactor lies between $0.1 \times 10^{-2}$ m³/m²/s and $10 \times 10^{-2}$ m³/m²/s.

5. Process as claimed in any one of claims 1-4, characterized in that the total volume of liquid introduced into the reactor per unit of time is such that the volume of liquid per unit of time that, per unit of area of the cross section of the reactor, moves through the reactor lies between $0.05 \times 10^{-2}$ m³/m²/s and $5 \times 10^{-2}$ m³/m²/s.

6. Process as claimed in any one of claims 1-5, characterized in that the gas contains free hydrogen, the liquid contains hydrocarbons, and the solid particles contain a catalytically active material to catalyze the treatment or production of the hydrocarbon-containing liquid.

7. Apparatus for contacting gas, liquid and solid particles comprising a reactor provided with inlet means for gas and liquid arranged in the lower part of the reactor, outlet means for gas and liquid arranged in the upper part of the reactor, an inlet for solid particles arranged in the upper part of the reactor, an outlet for solid particles arranged in the lower part of the reactor, and a number of contact zones arranged one above the other in the reactor, with a thickness of between 0.5 cm and 20 cm, separated by screens provided with a large number of apertures with an area per aperture of between 0.05 cm² and 5 cm², the ratio between the sum of the areas of the apertures and the total area of the screen lying between 0.4 and 0.8.

8. Apparatus as claimed in claim 7, characterized in that the thickness of a contact zone is between 0.5 cm and 20 cm, the area per aperture is between 1.5 cm² and 5 cm² and the ratio between the sum of the areas of the apertures and the total area of a screen lies between 0.5 and 0.8.

9. Apparatus as claimed in claim 7, characterized in that the thickness of a contact zone is between 5 cm and 20 cm, the area per aperture is between 1.5 cm² and 5 cm² and the ratio between the sum of the areas of the apertures and the total area of a screen lies between 0.5 and 0.65.

10. Apparatus as claimed in any one of claims 6-9, characterized in that the apparatus further comprises inlet means for introducing additional gas and/or additional liquid, which are arranged at different heights in the reactor.

**Patentansprüche**

1. Ein Verfahren zum Kontaktieren von Gas, Flüssigkeit und festen Teilchen in einem Reaktor umfassend

a) Einführen von Gas und Flüssigkeit in den unteren Teil des Reaktors und Einführen der festen Teilchen in den oberen Teil des Reaktors;

b) Leiten von Gas und Flüssigkeit in Aufwärtsrichtung durch eine Anzahl von Kontaktzonen, die übereinander angeordnet sind und eine Dicke von zwischen 0,5 cm und 20 cm aufweisen und durch Siebe voneinander getrennt sind, die mit einer großen Zahl von Öffnungen versehen sind, wobei die Fläche pro Öffnung zwischen 0,05 cm² und 5 cm² beträgt und wobei das Verhältnis zwischen der Summe der Flächen der Öffnungen und der Gesamtfläche eines Siebs zwischen 0,4 und 0,8 liegt, und Leiten der festen Teilchen in Abwärtsrichtung durch die Kontaktzonen; und

c) Entfernen von Gas und Flüssigkeit aus dem oberen Teil des Reaktors und Entfernen der festen Teilchen aus dem unteren Teil des Reaktors.

2. Verfahren, wie in Anspruch 1 beansprucht, dadurch gekennzeichnet, daß zusätzliches Gas und/oder zusätzliche Flüssigkeit in verschiedenen Höhen in den Reaktor eingespeist wird (werden).

3. Verfahren, wie in Anspruch 1 beansprucht, dadurch gekennzeichnet, daß das Gesamtvolumen des pro Zeiteinheit in den Reaktor eingespeisten Gases so hoch ist, daß das Gasvolumen pro Zeiteinheit, das pro Flächeneinheit des Querschnitts des Reaktors durch den Reaktor strömt, zwischen $0,1 \times 10^{-2}$ m³/m²/s und $20 \times 10^{-2}$ m³/m²/s liegt.

4. Verfahren, wie in Anspruch 3 beansprucht, dadurch gekennzeichnet, daß das Gesamtvolumen des pro Zeiteinheit in den Reaktor eingespeisten Gases so hoch ist, daß das Gasvolumen pro Zeiteinheit, das pro Flächeneinheit des Querschnitts des Reaktors durch den Reaktor strömt zwischen $0,1 \times 10^{-2}$ m³/m²/s und $10 \times 10^{-2}$ m³/m²/s liegt.

5. Verfahren wie in einem der Ansprüche 1 bis 4 beansprucht, dadurch gekennzeichnet, daß das Gesamtvolumen der pro Zeiteinheit in den Reaktor eingespeisten Flüssigkeit so hoch ist, daß das Flüssigkeitsvolumen pro Zeiteinheit, das pro Flächeneinheit des Querschnitts des Reaktors durch den Reaktor strömt, zwischen $0,05 \times 10^{-2}$ m³/m²/s und $5 \times 10^{-2}$ m³/m²/s liegt.

6. Verfahren wie in einem der Ansprüche 1 bis 5 beansprucht, dadurch gekennzeichnet, daß das Gas freien Wasserstoff, die Flüssigkeit Kohlenwasserstoffe und die festen Teilchen ein katalytisch aktives Material zum Katalysieren der Behandlung oder Herstellung der Kohlenwasserstoffe enthaltenden Flüssigkeit enthalten.

7. Vorrichtung zum Kontaktieren von Gas, Flüssigkeit und festen Teilchen, umfassend einen Reaktor mit Einlaßeinrichtungen für das Gas und die Flüssigkeit, die im unteren Teil des Reaktors angeordnet sind, Auslaßeinrichtungen für das Gas und die Flüssigkeit, welche im oberen Teil des Reaktors angeordnet sind, mit einem Einlaß für die festen Teilchen, welcher im oberen Teil des Reaktors vorgesehen ist, einem Auslaß für die festen Teilchen, welcher im unteren Teil des Reaktors vorgesehen ist, und mit einer Anzahl von Kontaktzonen, welche übereinander im Reaktor angeordnet sind, mit einer Dicke zwischen 0,5 und 20 cm, getrennt voneinander durch Siebe, welche mit einer großen Anzahl von Öffnungen mit einer Fläche zwischen 0,05 cm$^2$ und 5 cm$^2$ pro Öffnung versehen sind, wobei das Verhältnis zwischen der Summe der Flächen der Öffnungen und der Gesamtfläche eines Siebs zwischen 0,4 und 0,8 liegt.

8. Vorrichtung wie in Anspruch 7 beansprucht, dadurch gekennzeichnet, daß die Dicke einer Kontaktzone zwischen 0,5 cm und 20 cm liegt, die Fläche pro Öffnung zwischen 1,5 cm$^2$ und 5 cm$^2$ liegt und das Verhältnis zwischen der Summe der Flächen der Öffnungen und der Gesamtfläche eines Siebs zwischen 0,5 und 0,8 liegt.

9. Vorrichtung wie in Anspruch 7 beansprucht, dadurch gekennzeichnet, daß die Dicke einer Kontaktzone zwischen 5 cm und 20 cm liegt, die Fläche pro Öffnung zwischen 1,5 cm$^2$ und 5cm$^2$ liegt und das Verhältnis zwischen der Summe der Flächen der Öffnungen und der Gesamtfläche eines Siebs zwischen 0,5 und 0,65 liegt.

10. Vorrichtung wie in einem der Ansprüche 6 bis 9 beansprucht, dadurch gekennzeichnet, daß die Vorrichtung ferner Einlaßeinrichtungen zum Einspeisen von zusätzlichem Gas und/oder zusätzlicher Flüssigkeit umfaßt, welche in verschiedenen Höhen im Reaktor angeordnet sind.

**Revendications**

1. Procédé pour mettre en contact du gaz, du liquide et des particules solides dans un réacteur, consistant à
(a) introduire du gaz et du liquide dans la partie inférieure du réacteur et introduire des particules solides dans la partie supérieure du réacteur;
(b) faire passer du gaz et du liquide vers le haut à travers un certain nombre de zones de contact agencées l'une au-dessus de l'autre et présentant une épaisseur entre 0,5 cm et 20 cm et séparées les unes des autres par des écrans pourvus d'un grand nombre d'ouvertures avec une surface par ouverture entre 0,05 cm$^2$ et 5 cm$^2$, le rapport entre la somme des surfaces des ouvertures et la surface totale d'un écran se situant entre 0,4 et 0,8, et laisser les particules solides passées vers le bas à travers les zones de contact ; et

(c) à évacuer le gaz et le liquide de la partie supérieure du réacteur puis éliminer les particules solides de la partie inférieure du réacteur.

2. Procédé tel que revendiqué dans la revendication 1, caractérisé en ce que du gaz additionnel et/ou du liquide additionnel est introduit dans le réacteur à différentes hauteurs.

3. Procédé tel que revendiqué dans la revendication 1 ou 2, caractérisé en ce que le volume total de gaz introduit dans le réacteur par unité de temps est tel que le volume de gaz par unité de temps qui, par unité de surface de la section transversale du réacteur, se déplace à travers le réacteur, se situe entre 0,1 × 10$^{-2}$ m$^3$/m$^2$/s et 20 × 10$^{-2}$ m$^3$/m$^2$/s.

4. Procédé tel que revendiqué dans la revendication 3, caractérisé en ce que le volume total de gaz introduit dans le réacteur par unité de temps est tel que le volume de gaz par unité de temps qui par unité de surface de la section transversale du réacteur, se déplace à travers le réacteur se situe entre 0,1 × 10$^{-2}$ m$^3$/m$^2$/s et 10 × 10$^{-2}$ m$^3$/m$^2$/s.

5. Procédé tel que revendiqué dans l'une quelconque des revendications 1 à 4, caractérisé en ce que le volume total de liquide introduit dans le réacteur par unité de temps est tel que le volume de liquide par unité de temps qui, par unité de surface de la section transversale du réacteur, se déplace à travers le réacteur se situe entre 0,05 × 10$^{-2}$ m$^3$/m$^2$/s et 5 × 10$^{-2}$ m$^3$/m$^2$/s.

6. Procédé tel que revendiqué dans l'une quelconque des revendications 1 à 5, caractérisé en ce que le gaz contient de l'hydrogène libre, le liquide contient des hydrocarbures et les particules solides contiennent un matériau catalytiquement actif pour catalyser le traitement ou la production de liquide renfermant des hydrocarbures.

7. Appareil pour mettre en contact du gaz, du liquide et des particules solides, lequel appareil selon l'invention comprend un réacteur pourvu d'un dispositif d'entrée pour le gaz et le liquide, agencé dans la partie supérieure du réacteur, d'un dispositif de sortie pour le gaz et le liquide agencé dans la partie supérieure du réacteur, d'un conduit d'entrée pour les particules solides agencées dans la partie supérieure du réacteur, d'un conduit de sortie pour les particules solides agencées dans la partie inférieure du réacteur, et un certain nombre de zones de contact agencées les unes au-dessus des autres dans le réacteur, avec une épaisseur entre 0,5 cm et 20 cm, séparées par des écrans pourvus d'un grand nombre d'ouvertures avec une surface par ouverture entre 0,05 cm$^2$ et 5 cm$^2$, le rapport entre la somme des surfaces des ouvertures et la surface totale d'un écran se situant entre 0,4 et 0, 8.

8. Appareil tel que revendiqué dans la revendication 7, caractérisé en ce que l'épaisseur d'une zone de contact se situe entre 0,5 cm et 20 cm, la surface par ouverture se situe entre 1,5 cm$^2$ et 5 cm$^2$ et le rapport entre la somme des surfaces des ouvertures et la surface totale d'un écran se situe entre 0,5 et 0,8.

9. Appareil tel que revendiqué dans la revendication 7, caractérisé en ce que l'épaisseur d'une zone de contact située entre 5 cm et 20 cm, la surface par ouverture se situe entre 1,5 cm$^2$ et 5 cm$^2$ et le

rapport entre la somme des surfaces des ouvertures et la surface totale d'un écran se situe entre 0,5 et 0,65.

10. Appareil tel que revendiqué dans l'une quelconque des revendications 6 à 9, caractérisé en ce que l'appareil comprend en outre, pour introduire du gaz additionnel et/ou du liquide additionnel, des dispositifs d'entrée qui sont agencés à différentes hauteurs dans le réacteur.

FIG.1

FIG.2A

FIG.2B